(19) Europäisches Patentamt
European Patent Office
Office européen des brevets

(11) **EP 1 901 094 A1**

(12) **EUROPEAN PATENT APPLICATION**

(43) Date of publication:
**19.03.2008 Bulletin 2008/12**

(51) Int Cl.:
**G01V 3/30** (2006.01)

(21) Application number: **06291460.1**

(22) Date of filing: **15.09.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicants:
• **Services Pétroliers Schlumberger**
**75007 Paris (FR)**
Designated Contracting States:
**FR**
• **Schlumberger Technology B.V.**
**2514 JG  The Hague (NL)**
Designated Contracting States:
**BG CZ DE DK GR HU IE IT LT PL RO SI SK**
• **Schlumberger Holdings Limited**
**Road Town, Tortola (VG)**
Designated Contracting States:
**GB NL**
• **PRAD Research and Development N.V.**
**Willemstad, Curacao (AN)**
Designated Contracting States:
**AT BE CH CY EE ES FI IS LI LU LV MC SE**

(72) Inventors:
• **Simon, Matthieu**
**92120 Montrouge (FR)**
• **Luling, Martin**
**75017 Paris (FR)**

(74) Representative: **Raybaud, Hélène F. A. et al**
**Etudes & Productions Schlumberger**
**1, rue Henri Becquerel**
**B.P. 202**
**92142 Clamart Cedex (FR)**

(54) **An antenna for an electromagnetic probe for investigating geological formations and its applications**

(57) An antenna 3 of an electromagnetic probe 1 used in investigation of geological formations GF surrounding a borehole WBH comprises a conductive base 31 and a first antenna element 32. The conductive base 31 comprises an opened non-resonant cavity 33. The first antenna element 32 is embedded in the cavity 33 and goes right trough the cavity.

The first antenna element 32 is comprised of a center-split half-coaxial wire so as to define a symmetrized antenna radiation pattern.

Figure 8

**Description**

## FIELD OF THE INVENTION

The invention relates to a cross dipole antenna and an electromagnetic probe comprising such an antenna for measuring the electromagnetic properties of a subsurface formation in a limited zone surrounding a borehole. Another aspect of the invention relates to a logging tool for performing logs of subsurface formation bore hole. A particular application of the probe and the logging tool according to the invention relates to the oilfield services industry.

## BACKGROUND OF THE INVENTION

Logging devices that measure formation electromagnetic properties (e.g. dielectric constant) are known, for example from US 3,849,721, US 3,944,910 and US 5,434,507. The logging device includes a transmitter and spaced receivers mounted in a pad that is urged against a borehole wall. Microwave electromagnetic energy is transmitted into the formations, and energy that has propagated through the formations is received at the receiving antennas. The phase and amplitude of the energy propagating in the formations is determined from the receiver output signals. The dielectric constant and the conductivity of the formations can then be obtained from the phase and amplitude measurements.

The transmitters and receivers comprise antennas that are assimilated to magnetic dipoles. These dipoles are tangential to the pad face and are orientated in different directions. A broadside mode corresponds to the dipoles oriented orthogonally to the pad-axis. An endfire mode corresponds to the dipoles oriented in alignment with the pad axis. The depth of investigation for the broadside mode is very poor. The investigation depth for the endfire mode is greater than for the broadside mode, but the signal is weaker. The attenuation and phase-shift are measured between the two receivers. A simple inversion allows in case of a homogeneous formation to retrieve the dielectric constant and the conductivity. Typically, such a logging device is unable to provide an accurate measurement of the formation properties because of its high sensitivity to the standoff of the pad relatively to the formation or the presence of a mudcake on the borehole wall.

The document US 5,345,179 proposes a solution to improve the logging device response and accuracy in the presence of a mudcake. The logging device comprises a plurality of cross-dipole antennas, each being located in a cavity. The cross-dipole antenna houses both endfire and broadside polarizations in the same cavity.

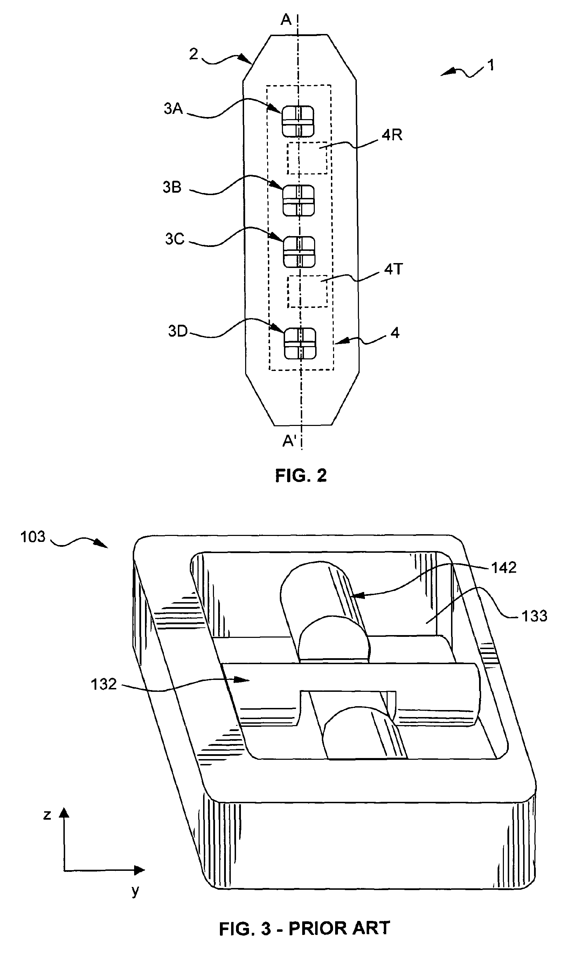

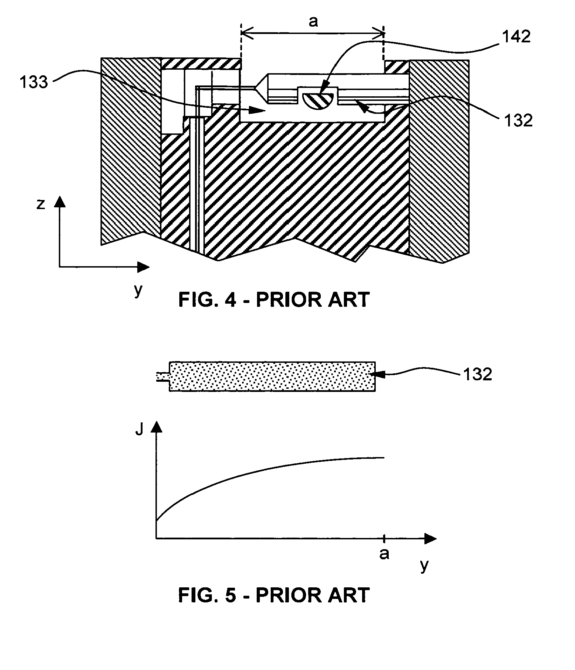

FIGS. 3 and 4 are perspective and cross-section views schematically showing a cross dipole antenna according to the prior art. Typically, such a cross dipole antenna 103 comprises two wires 132, 142 embedded in a non-resonant cavity 133 filled with a dielectric material and short-circuited to the conductive cavity wall at one end.

FIG. 5 illustrates the current distribution for a cross dipole antenna according to the prior art. The current distribution J is approximated from the analogy with a short-circuited transmission line. The current distribution on the radiating wire in the cavity can be approximated to:

$$J(y) = J_0 \cos(k_0 [y - a])$$

where:

- $J_0$ is the current amplitude,
- a is the aperture size,
- $k_0$ is the wave number in the cavity and is equal to:

$$k_0 = \frac{\omega}{c} \sqrt{\varepsilon_{cavity}} ,$$

- $\varepsilon_{cavity}$ is the relative dielectric constant of the material filling the cavity,
- $\omega$ is the angular frequency, and
- c is the speed of light in vacuum.

The current is maximal at the short-circuit location. This cosinusoidal and asymmetric current distribution excites a strong, parasitic electric dipole.

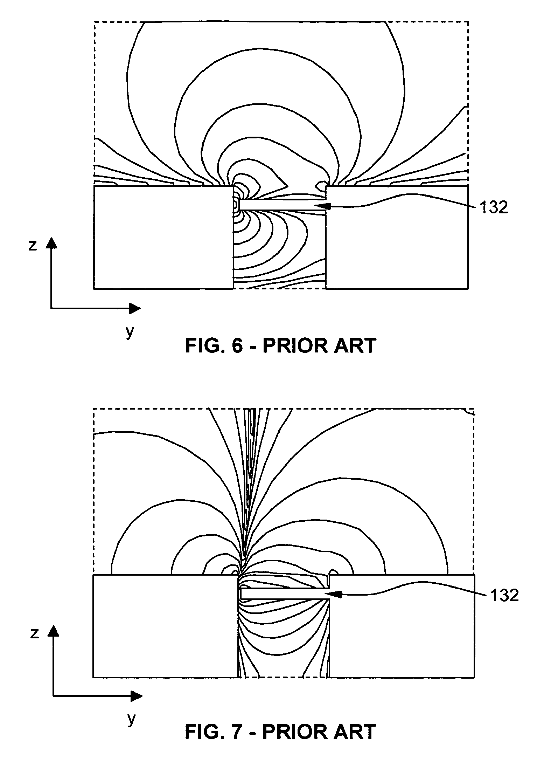

FIGS. 6 and 7 illustrate the electromagnetic field components Ey and Ez in the yz plane of a cross dipole antenna 103 (more precisely of the radiating wire) of the prior art, respectively.

The current flowing on the wire, for example wire 132, excites modes in the cavity. The dominant mode is the transverse electric mode $TE_{10}$. This mode contributes to a radiation pattern, which is close to a magnetic point dipole m orthogonal to the wire. The current distribution on the wire will also excite parasitic modes, the dominant one being the transverse magnetic mode $TM_{11}$. This mode corresponds to an electric dipole p normal to the aperture. These parasitic modes cause a strong asymmetry of the electromagnetic field Ey and Ez in the yz plane.

Thus, the antennas of the prior art are far from being pure magnetic dipoles. In particular, the parasitic electric dipole, normal to the aperture affects the measurement accuracy. Further, due to the parasitic electric dipole, the crosstalk between the two polarizations is important and "cross-fire" measurements (i.e transmitters in broadside mode and receivers in endfire mode) cannot be performed.

## SUMMARY OF THE INVENTION

One goal of the invention is to propose a cross-dipole antenna and an electromagnetic probe comprising such a cross-dipole enabling measurement of the electromagnetic properties of a subsurface formation in a limited zone surrounding a borehole avoiding, at least reducing the drawbacks of the prior art antennas and probes.

According to a first aspect of the invention, an antenna is proposed comprised of at least one center-split half-coaxial wire embedded in a cavity to define a symmetrized radiation pattern.

More precisely, a first aspect of the present invention relates to an antenna of an electromagnetic probe used in investigation of geological formations surrounding a borehole comprising a conductive base and a first antenna element, the conductive base comprising an opened non-resonant cavity, the first antenna element being embedded in the cavity and going right through the cavity,

wherein the first antenna element comprises a connection wire coupled to a dipole wire, the connection wire passing through the conductive base and being insulated relatively to the conductive base, and

wherein the dipole wire extends through the cavity from a first cavity wall to a second cavity wall, the dipole wire being shorted to the second cavity wall, the dipole wire having a first portion of a first diameter and a second portion of a second diameter superior to the first diameter, an outer cylindrical conductor shorted to the first cavity wall shielding the wire substantially around the first portion, the outer cylindrical conductor having a diameter substantially equal to the second diameter, a gap separating the outer cylindrical conductor from the second portion, the gap being positioned at substantially half of a length of the dipole wire.

Advantageously, the antenna may be a cross-dipole antenna comprising a first antenna element and a second antenna element, the second antenna element having a structure identical to the first antenna element, and wherein the second antenna element is positioned into the cavity and according to a direction defined by the dipole wire of the second antenna element substantially orthogonal to a first antenna element dipole wire defined direction.

The cavity may have a parallelepipedic or a cylindrical shape. The cavity may be filled with a dielectric material or a shaped core made of a magnetically permeable material. Advantageously, the cavity may be closed by a cover made of a protective material.

Another aspect of the invention relates to an antenna module comprising an antenna of the invention, wherein the conductive base further comprises a printed circuit board coupled to the antenna by means of the connection wire, the printed circuit board comprising an impedance-matching network and being located at a distance inferior to a size of the cavity from the dipole wire.

Still another aspect of the invention relates to an electromagnetic logging apparatus used in investigation of geological formations surrounding a borehole, comprising:

- a logging tool moveable through the borehole,
- an electromagnetic probe comprising a pad mounted on the logging device, adapted for engagement with the borehole wall by a wall-engaging face,
- at least one antenna mounted in the wall-engaging face and used as a transmitting antenna,
- a plurality of spaced antennas mounted in the wall-engaging face and used as receiving antennas positioned in spaced relation to the transmitting antenna,
- a transmitter module adapted for energizing the transmitting antenna to transmit electromagnetic energy into the formations at a determined frequency, and
- a receiver module adapted for receiving and processing an output signal at each of the receiving antennas representative of electromagnetic energy received from the formations,

wherein at least one of the receiving antennas is an antenna according to the invention.

A further aspect of the present invention relates to a cross-polarization measurement method using an electromagnetic logging apparatus according to the invention and comprising the steps of:

- running a logging tool through a borehole and engaging a pad with a borehole wall,
- radiating electromagnetic signals into a formation surrounding the borehole by means of at least one transmitting antenna according to the invention, the formation comprising a plurality of geological feature, the electromagnetic signals being radiated in two orthogonal polarizations with a high degree of mutual signal rejection, one polarization being parallel to an axis of the pad, the other being orthogonal to said axis,
- performing a plurality of cross-polarization measurements by means of at least one receiving antenna according to the invention, the cross-polarization measurements consisting in measuring magnetic moments according to two orthogonal polarization directions and generating a broadside signal corresponding to a horizontal magnetic moment excitation and an endfire signal corresponding to a vertical magnetic moment excitation, and
- deducing the plurality of geological feature surrounding the borehole based on the broadside and endfire signals.

The cross-polarization measurement may further comprise the steps of:

- combining the cross-polarization measurements so as to form a cross-polarization signal, and
- deducing the plurality of geological feature surrounding the borehole based on the cross-polarization signal.

The geological feature may be a laminate, a fracture, a bed boundary or a vug.

A non-zero broadside signal and a substantially zero endfire signal may correspond to a heterogeneous formation comprising horizontal fractures filled with a resistive fluid.

A non-zero endfire signal and a substantially zero broadside signal may correspond to a heterogeneous formation comprising vertical fractures filled with a resistive fluid.

A cross-polarization signal substantially equal to zero may correspond to a homogeneous, isotropic formation comprising horizontal laminates or horizontal bed boundaries.

A cross-polarization signal proportional to a product $\sin\theta \times \cos\theta$ to a lowest order may correspond to a heterogeneous formation comprising laminates, fractures or bed boundaries tilted against the polarization directions by an angle $\theta$.

A localized, non-zero cross-polarization signal may correspond to a heterogeneous formation comprising randomly sized and distributed vugs.

The antenna for an electromagnetic probe used in geological surveys of the invention enables a better measurement accuracy than the antenna of the electromagnetic propagation tool as described in the prior art.

The cross-dipole antenna of the invention enables radiating electromagnetic signals in either of two orthogonal polarizations. The cross-dipole antenna of the invention enables eliminating parasitic, higher-order modes and improves the mutual electromagnetic insulation. Thus, the orthogonality of the two modes is ensured with a high degree of mutual insulation, any common mode being suppressed by the cross-dipole antenna of the invention.

The decoupled modes for transmitter and receiver antennas enable additional measurements that vanish in homogeneous, isotropic media. These measurements provide an estimation of the formation anisotropy, presence of tilted bed boundaries or fractures and also vug identification.

## BRIEF DESCRIPTION OF THE DRAWINGS

The present invention is illustrated by way of examples and not limited to the accompanying figures, in which like references indicate similar elements:

FIG. 1 schematically illustrates a typical onshore hydrocarbon well location;

FIG. 2 schematically shows a borehole wall contacting side view of a pad for measuring the electromagnetic properties of a subsurface formation;

FIG. 3 is a perspective view schematically showing in greater details a cross dipole antenna of the pad of FIG. 2 according to the prior art;

FIG. 4 is a cross-section view schematically showing in greater details a cross dipole antenna according to the prior art;

FIG. 5 illustrates the current distribution for a cross dipole antenna according to the prior art;

FIGS. 6 and 7 illustrate the electromagnetic field Ey in yz plane and Ez in yz plane of a cross dipole antenna according to the prior art, respectively;

FIG. 8 is a partial perspective view schematically showing in details a cross dipole antenna according to the invention;

FIG. 9 is a cross-section view schematically showing in details a cross dipole antenna according to the invention;

FIG. 10 illustrates the current distribution for a cross dipole antenna according to the invention;

FIGS. 11 and 12 illustrate the electromagnetic field Ey in the yz plane and Ez in the yz plane of a cross dipole antenna according to the invention, respectively;

FIG. 13 is a graphic showing two curves comparing the ratio of the direct signals to the cross signals measured by the antennas in a range of frequency according to the invention and according to the prior art;

FIG. 14 schematically illustrates horizontal laminate, perpendicular with the pad measurement axis;

FIG. 15 schematically illustrates dipping laminate, tilted by 30° against the pad measurement axis;

FIG. 16 schematically illustrates horizontal bed boundaries, perpendicular with the pad measurement axis;

FIG. 17 schematically illustrates dipping bed boundary, tilted by 30° against the pad measurement axis;

FIG. 18 schematically illustrates horizontal fractures, perpendicular with the pad measurement axis;

FIG. 19 schematically illustrates vertical fractures, parallel to the pad measurement axe;

FIG. 20 schematically illustrates dipping fractures, tilted by 30° against the pad measurement axis;

FIG. 21 schematically illustrates randomly sized and distributed vugs affecting the measurements;

FIG. 22-23 is a perspective view above the pad schematically showing a cross-dipole antenna of to the invention according to a particular embodiment; and

FIG. 24 is a graphic showing two curves comparing the transmission efficiency measured in a range of frequency with an antenna of the invention with a cavity filled with a dielectric material compared to a cavity filled with a ferrite material.

## DETAILED DESCRIPTION OF THE INVENTION

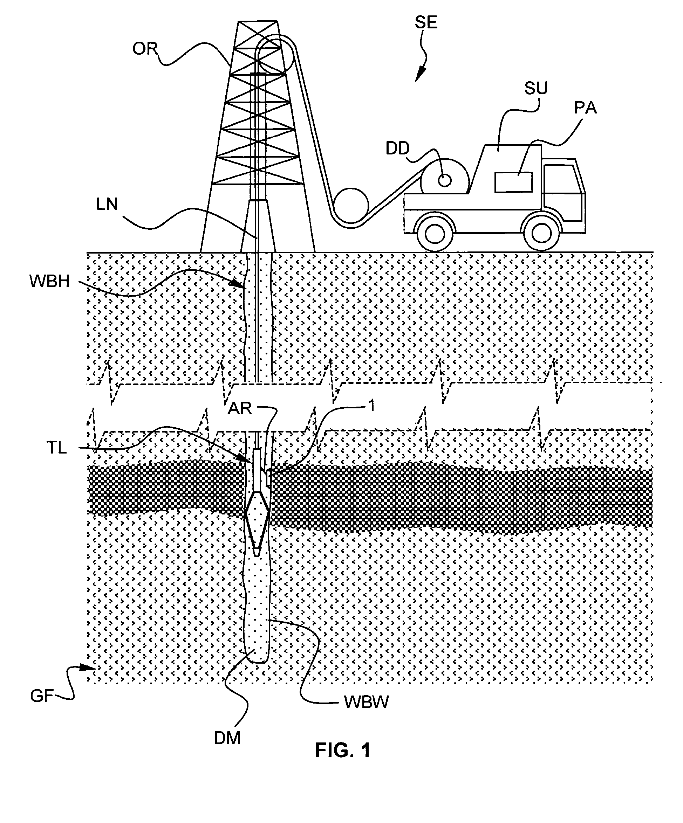

FIG. 1 schematically shows a typical onshore hydrocarbon well location and surface equipments SE above a hydrocarbon geological formation GF after drilling operations have been carried out. At this stage, i.e. before a casing string is run and before cementing operations are carried out, the wellbore is a borehole WBH filled with a fluid mixture DM. The fluid mixture DM is typically a mixture of drilling fluid and drilling mud. In this example, the surface equipments SE comprises an oil rig OR and a surface unit SU for deploying a logging tool TL in the well-bore. The surface unit may be a vehicle coupled to the logging tool by a line LN. Further, the surface unit comprises an appropriate device DD for determining the depth position of the logging tool relatively to the surface level. The logging tool TL comprises various sensors and provides various measurement data related to the hydrocarbon geological formation GF and/or the fluid mixture DM. These measurement data are collected by the logging tool TL and transmitted to the surface unit SU. The surface unit SU comprises appropriate electronic and software arrangements PA for processing, analyzing and storing the measurement data provided by the logging tool TL.

The logging tool TL comprises a probe 1 for measuring the electromagnetic properties of a subsurface formation according to the invention. Once the logging tool is positioned at a desired depth, the probe 1 can be deployed from the logging tool TL against the borehole wall WBW by an appropriate deploying arrangement, for example an arm AR.

FIG. 2 schematically shows a well-bore wall contacting face view of the probe 1. The probe 1 comprises a pad 2. The pad is a conductive metal housing, for example made in a metallic material like stainless steel arranged to be positioned in contact with a well-bore wall WBW. The pad 2 is coupled to the tool TL by the arm AR (shown in FIG. 1). The arm enables the deployment of the pad 2 into the borehole WBH against the well-bore wall WBW.

The probe 1 further comprises transmitting and receiving antennas, for example two transmitting antennas 3B and 3C, and two receiving antennas 3A and 3D. The transmitting antennas 3B and 3C and the receiving antennas 3A and 3D are positioned in the pad along a line AA' in the pad face arranged to be positioned in contact with the well-bore wall WBW. The number of the transmitting and receiving antennas, and their positions relatively to each other, as illustrated in FIG. 2, is only an example. The number and positions of the transmitting and receiving antennas may be different.

The probe 1 further comprises an electronic arrangement 4 connected to the transmitting and receiving antennas. Typically, the electronic arrangement 4 is designed such that the antenna may operate in a frequency range from around 10 MHz to around 2GHz. The electronic arrangement 4 comprises a transmitter module 4T and a receiver module 4R. The transmitter module 4T is arranged to excite the transmitting antennas 3B and/or 3C by applying an excitation signal. The receiver module 4R is arranged to determine an attenuation and a phase shift of a reception signal provided by the receiving antenna 3A and 3D relatively to the excitation signal ES.

Additionally, the electromagnetic probe 1 may comprise other type of sensors (not shown), for example a temperature sensor, for measuring characteristic parameters of the fluid mixture, the mudcake, and/or the formation.

One or more coaxial cables (not shown) may be run though the arm AR for connecting the electronic arrangement 4 with the tool TL. The tool TL contains the bulk of the downhole electronics (not shown) and provides energy and control commands, and gathers measurements from the electromagnetic probe 1. Alternatively, the electronic arrangement 4 may comprise a data communication module (not shown) for directly transmitting measurements to the surface equipment SE and receiving control commands from it.

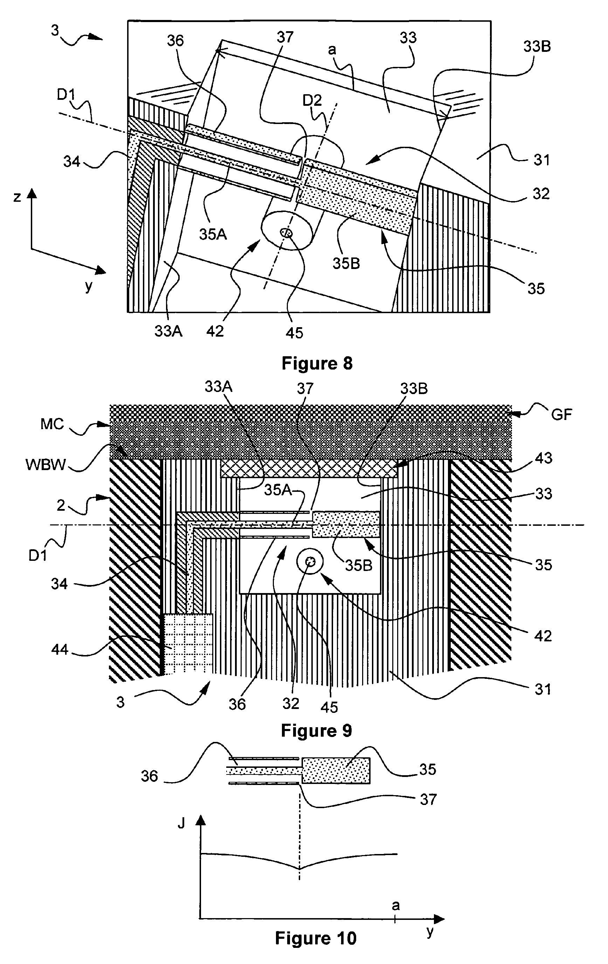

FIGS. 8 and 9 illustrate a partial perspective view and cross-section view of a cross dipole antenna according to the invention, respectively. The antenna that will be described hereinafter may be used as a transmitting antenna or as a receiving antenna.

In FIG. 9, the cross-dipole antenna is shown fitted into the pad 2, while the pad contacts the well-bore wall WBW. Typically, as in this example, the well-bore wall WBW consists in the formation covered by a mudcake MC. The mudcake MC is formed on the wellbore wall WBW by the screening of the particles of mud suspended into the fluid mixture when the fluid mixture invades the formation.

The antenna 3 comprises a conductive base 31 and a first antenna element 32. The conductive base 31 comprises an open, non-resonant cavity 33. The antenna may comprise a second antenna element 42 as illustrated in FIGS. 8 and 9. Both antennas are positioned within the cavity not touching where they cross each other.

The cavity 33 has a parallelepipedic shape. Nevertheless, the cavity 33 may have other shapes, for example a cylindrical shape. Advantageously, the cavity is filled with a dielectric material. Any dielectric material may be used as the dielectric constant of said material filling the cavity has no impact on the radiation purity. The cavity is closed by a cover or window 43 in order to retain and protect the dielectric material. Advantageously, the cover 43 is made of a protective material, resistant to abrasion, for example PEEK (thermoplastic PolyEtherEtherKeton). However, any other material that does not perturb high-frequency-wave propagation and shows an appropriate mechanical resistance to abrasion is acceptable. As example, the aperture size $a$ defined by such a cavity may be around 10 mm.

The first antenna element goes right through the cavity. The first antenna element 32 comprises a connection wire 34 coupled to a dipole wire 35. The connection wire 34 passes through the conductive base 31 and is insulated relatively to the conductive base.

The dipole wire 35 extends through the cavity from a first cavity wall 33A to a second cavity wall 33B. The dipole wire 35 is shorted to the second cavity wall 33B. The dipole wire has a first portion 35A of a first diameter and a second portion 35B of a second diameter superior to the first diameter. The first portion 35A is coupled to the connection wire 34. The second portion 35B is shorted to the second cavity wall. The dipole wire is shielded by an outer cylindrical conductor 36 shorted to the first cavity wall 33A substantially around the first portion 35A. The outer cylindrical conductor 36 has a diameter substantially equal to the second diameter. The outer cylindrical conductor 36 has a thickness such that it does not contact the first portion 35A. The first portion 35A and the outer cylindrical conductor 36 form a coaxial wire. A gap 37 separates the outer cylindrical conductor from the second portion 35B. The gap is positioned at substantially half of a length of the dipole wire 35. Advantageously, the gap is thin, for example inferior to 1 mm for a 10 mm aperture size. Further, the gap is advantageously centered in the cavity with a tight tolerance, for example smaller than 2 % of the aperture size.

The second antenna element 42 has a structure identical to the first antenna element and will not be further described. The second antenna element is positioned into the cavity over or under the first antenna element. The direction D2 defined by the dipole wire 45 of the second antenna element 42 is substantially orthogonal to the direction D1 defined by the dipole wire 35 of the first antenna element 32.

The metallic parts of the antenna may be gold-plated to minimize Ohmic losses.

The antenna 3 may be designed under the form of an antenna module inserted into a slot of the pad 2. In this case, the conductive base 31 may advantageously comprise a printed-circuit board 44 coupled to the antenna 32 by means of the connection wire 34. Advantageously, the printed-circuit board 44 comprises an impedance-matching network (not shown). The impedance-matching network enables maximizing the power transmitted into the formation when the antenna is a transmitter, or, by reciprocity, the power received when the antenna is a receiver. Further, the impedance-matching network is located closely to the dipole wire 35 in order to improve its efficiency. For example, the printed-circuit board 44 may be located at a distance inferior to a size of the cavity 33 from the dipole wire. Finally, the matching network may be designed for several discrete frequencies with passive components (inductances or capacitances) or active components (variable capacitance). The active components enable operating in a frequency range from 0.1 GHz to 2.0 GHz with a maximized efficiency.

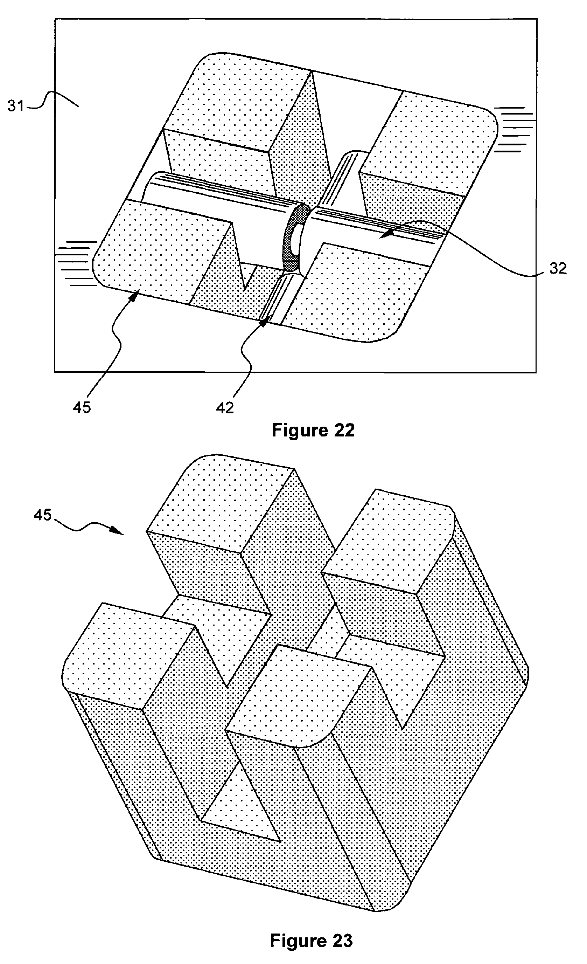

According to an alternative embodiment of the antenna, the cavity may be filled with a magnetically permeable material. For example, a shaped core 45 comprising two crossed and superposed grooves adapted to fit into the cavity and to receive the antenna elements 32 and 42 is shown in FIG. 22-23. Advantageously, the material has a high magnetic permeability. As an example, the shaped core may be made of a ferrite material. The antenna according to this alternative embodiment enables increasing the antenna efficiency; in particular the magnetic flux is increased. The gain in efficiency is proportional to the square root of the material relative magnetic permeability (the ferrite relative permeability is around 10).

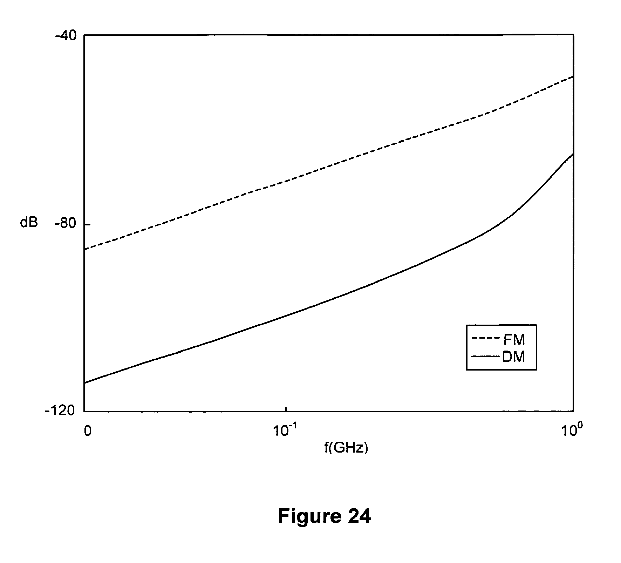

FIG. 24 shows two curves comparing the transmission efficiency measured in a range of frequency for a cavity filled with a dielectric material (unbroken line DM) compared to a cavity filled with a ferrite material (dashed line FM). The gain in signal level at a receiving antenna can be around 30 dB, especially at low frequency.

The behavior of the antenna according to the invention will now be described in relation with FIGS. 10-13. The antenna according to the invention behaves like two orthogonal and independent pure magnetic dipoles.

A small aperture, compared to wavelength and observation point, in a conductive plane can be considered, in term of radiation, as the superposition of a magnetic dipole, tangential to the conductive plane, and an electric dipole normal to the aperture. The magnetic and electric dipole moments can be expressed as function of the tangential electric field at the aperture:

$$m = -\frac{2}{j\omega\mu} \int_{aperture} \hat{n} \times E_a \, da \quad \text{and} \quad p = \hat{n}\varepsilon \int_{aperture} (r \cdot E_a) \, da$$

where:

- a is the size of the aperture,
- $E_a$ is the tangential electric field at the aperture,
- m is the magnetic dipole moment,
- p is the electric dipole moment,
- w is the angular frequency,
- $\varepsilon$ is the medium permittivity,
- $\mu$ is the magnetic permeability,
- n is a unit vector normal to the aperture, and
- r is a vector, i.e. the center of the aperture is the origin of the referential, the vector pointing towards the integration point in the aperture plane.

The antenna according to the invention considerably reduces the electric-dipole moment p, compared to the prior art antenna described hereinbefore. The field $E_a$ at the antenna aperture is linked to the current variation on the wire acting as a radiating element extending into in the cavity.

FIG. 10 illustrates the current distribution J as a function of y (position along the wire 35) of the antenna according to the invention. In the coaxial wire (the first portion 35A and the outer conductor 36) the current that flows in the first portion 35A is equal to the current on the internal side of the outer conductor 36, but with an opposite direction. The current on the external side of the second portion 35B flows in the same direction as for the first portion 35A, but with a symmetric distribution.

$$J(y) = \begin{cases} J_0 \cos(k_0 y) & \text{for } 0 < y < a/2 \\ J_0 \cos(k_0[y-a]) & \text{for } a/2 < y < a \end{cases}$$

With this current distribution, the electric field at the aperture is fully symmetric.
The electric dipole moment p is given by:

$$p = \hat{n}\varepsilon \int_{aperture} (r \cdot E_a) \, da$$

Hence, the electric dipole moment p is theoretically null for the antenna according to the invention, while the magnetic dipole moment m remains unchanged.

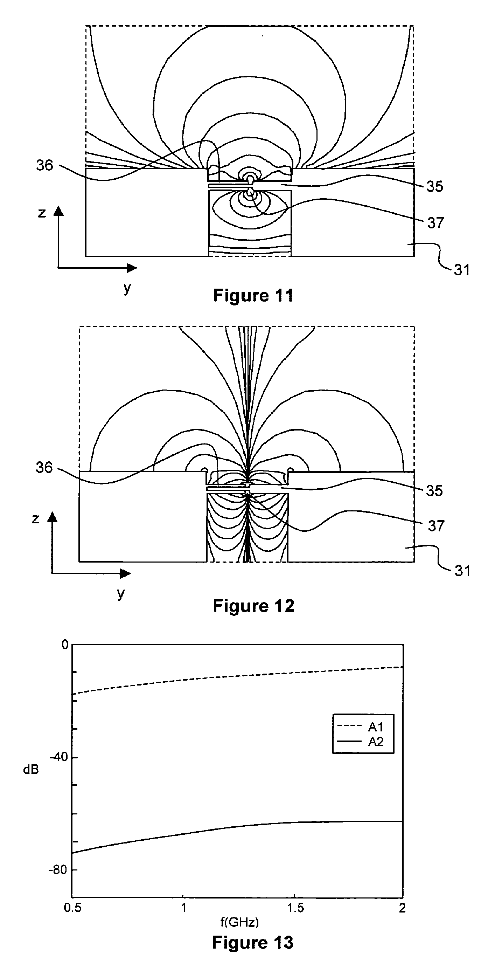

FIGS. 11 and 12 illustrate the electromagnetic field Ey in the yz plane and Ez in the yz plane of the cross dipole antenna (more precisely of the radiating wire) of the invention, respectively. These Figures clearly show that the antenna of the invention symmetrizes the fields. The antenna of the invention behaves like a pure magnetic dipole with no parasitic radiation.

FIG. 13 shows two curves comparing the ratio of the direct signals (broadside mode) to the cross signals (endfire mode) measured by the antennas according to the invention (unbroken line curve A2) and according to the prior art (dashed line curve A1), in a range of frequency from 0.5 GHz to 2.0 GHz. These measurements combine the effect of the parasitic electric dipole and the crosstalk between two orthogonal polarizations in the same cavity. These measurements have been performed with antennas having the same dimensions and the same material filling the cavity. The antennas are both cross dipole antennas. A transmitter is excited in broadside mode and the signals received are measured at the antenna. A first polarization is measured with a first wire, e.g. wire 132 for the antenna of the prior art (FIG. 3) and wire 32 for the antenna of the invention (FIG. 8). A second polarization is measured with a second wire orthogonal to the first wire, e.g. wire 142 for the antenna of the prior art (FIG. 3) and wire 42 for the antenna of the invention (FIG. 8). It is observed that with the antenna of the invention, the "crosstalk" between the two polarizations becomes negligible compared to the antenna of the prior art. Up to 2.0 GHz, the ratio is less than -60dB for the antenna of the invention, while it is always more than -20dB for the antenna of the prior art. This difference shows the excellent cross-polarizations rejection of the antenna of the invention.

Thus, with an electromagnetic logging apparatus using the antenna of the invention, a cross-polarization measurement method can be implemented. The cross-dipole antennas are used in an electromagnetic logging apparatus. The structure and operation of such an electromagnetic logging apparatus is described in details in the patent application published under No EP 1 693 685 (filed on 22 February 2005), which is incorporated herein by reference. The electromagnetic probe of the present invention differs from the one of EP 1 693 685 in that it comprises the cross-dipole antennas of the invention as hereinbefore described that radiate electromagnetic waves in two orthogonal polarizations. With the invention, the cross-dipole antennas radiate electromagnetic waves in two orthogonal polarizations with a high degree of mutual signal rejection which is accomplished by means of the elimination of all parasitic, common radiating modes between the antennas.

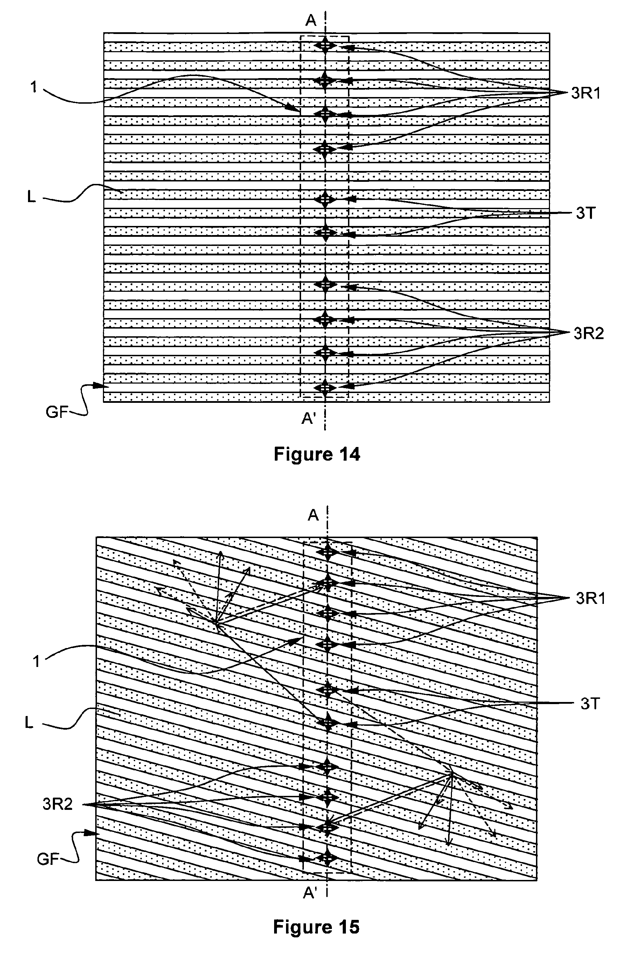

While the logging tool is being run through a borehole and the pad engaged with the borehole wall (FIG. 1), electromagnetic signals are radiated into the formation surrounding the borehole (FIGS. 14-21) by transmitting antenna 3T. The formation GF has a structure that may comprise various types of heterogeneous geological feature, for example laminates (L), fractures (F), bed boundaries (BB) or vugs (V); examples of which are schematically represented in FIGS. 14-21. A plurality of electromagnetic measurements are performed in two orthogonal polarization directions, one being parallel to an axis of the pad, the other being orthogonal to said axis. Then, the electromagnetic measurement according to one polarization is compared to the electromagnetic measurement according the other orthogonal polarization. From the result of this comparison, the type of the heterogeneous geological feature surrounding the borehole can be deduced.

FIGS. 14 to 21 illustrate various types of heterogeneous geological feature that may be detected and characterized with the cross-dipole antennas according to the invention. In FIGS. 14 to 21, a vertical magnetic moment is indicated by the vertical double arrow (corresponding to the transmitting 3T and receiving 3R1 and 3R2 antennas) and unbroken line arrow, and a horizontal magnetic moment are indicated by the horizontal arrow (corresponding to the transmitting 3T and receiving 3R1 and 3R2 antennas) and dashed line arrow. The receiving antennas are excited by the electromagnetic energy having a particular magnetic moment reflected by the geological formation GF. The horizontal element provides an endfire signal when excited by a vertical magnetic moment, while the vertical element provides a broadside signal when excited by a horizontal magnetic moment.

The electromagnetic probe 1 simultaneously provides multiple electromagnetic measurements in two orthogonal polarization directions. These simultaneous measurements are combined and compared so that the orthogonal polarizations illuminate heterogeneous features in the rock in different manners. It is possible to quantitatively characterize finely bedded or laminated geological formations. For example, the response to bed boundaries or fractures depends on the orientation of the polarizations with respect to these structures.

Below the typical 25 mm thin-bed resolution limit of prior art electromagnetic probe, the laminated formation is encountered as effectively anisotropic medium. The two orthogonal polarizations of the electromagnetic probe with antennas of the invention can discriminate this anisotropy. The two orthogonal polarization directions completely decouple the measurements in homogeneous, isotropic formations. In anisotropic, fractured or high-contrast bedded formations the measurements may show interferences between the two modes if the formation structure is tilted at some skewed angle against the polarization direction. Therefore, the cross-polarization measurements, which are zero in isotropic media, provide quantitative information on the relative inclination angle and the conductivity-permittivity contrast in the heterogeneous medium. In anisotropic media the anisotropy-tensor axes may be tilted against the polarization directions by an angle $\theta$. In this case, the cross-polarization signal will be proportional to the product $\sin\theta \times \cos\theta$ to the lowest order. Bed boundaries or fractures may be tilted against the polarization axes by the angle $\theta$. The cross-polarization signal will be proportional to the hereinbefore mentioned product. A known two-dimensional Eigenmode analysis of the in-line and cross-polarization measurements will estimate the tilt angle $\theta$ and determine the anisotropic formation parameters (permittivity and conductivity) or the fluid content of the fracture or the permittivity-conductivity contrast across the bed boundary.

FIG. 14 schematically illustrates a formation comprising horizontal laminates that are perpendicular with the pad/probe measurement axis AA'. This situation corresponds to a homogeneous, isotropic medium, resulting in a cross-polarization signal substantially equal to zero.

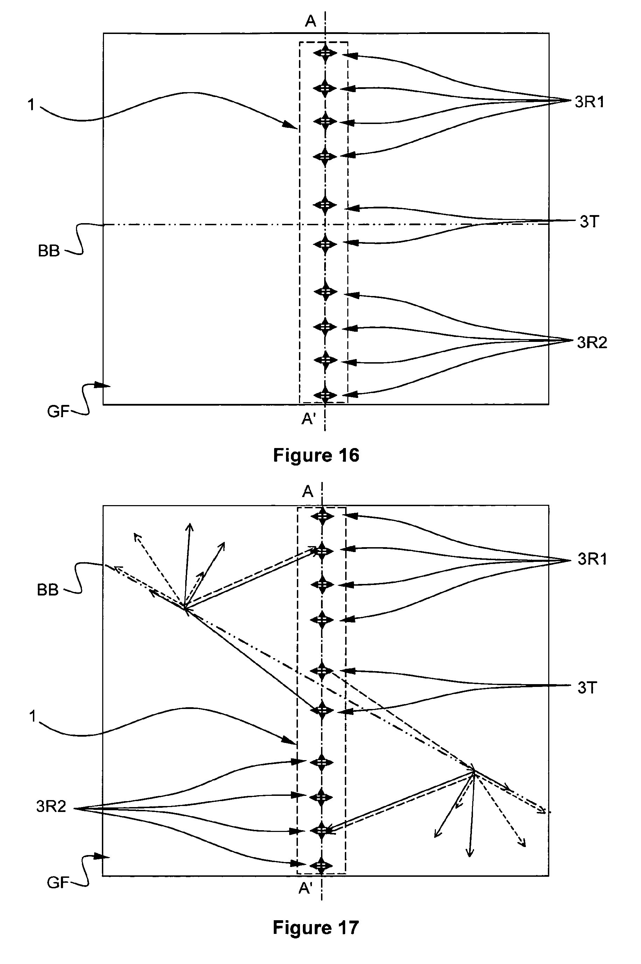

FIG. 16 schematically illustrates a formation comprising horizontal bed boundaries that are perpendicular with the pad measurement axis AA'. The response of the probe is analogous to the situation with a horizontal laminate.

FIG. 15 schematically illustrates a formation comprising a dipping laminate that is tilted by an angle of around 30° against the pad-measurement axis AA'. The combined endfire and broadside measurements enable inverting the anisotropic permittivity and conductivity of such a laminated formation with known tilt angle $\theta$.

FIG. 17 schematically illustrates a formation comprising dipping bed boundary that is tilted by an angle of around 30° against the pad-measurement axis AA'. In this situation, the response of the probe is a signal being a combination of the broadside mode and the endfire mode.

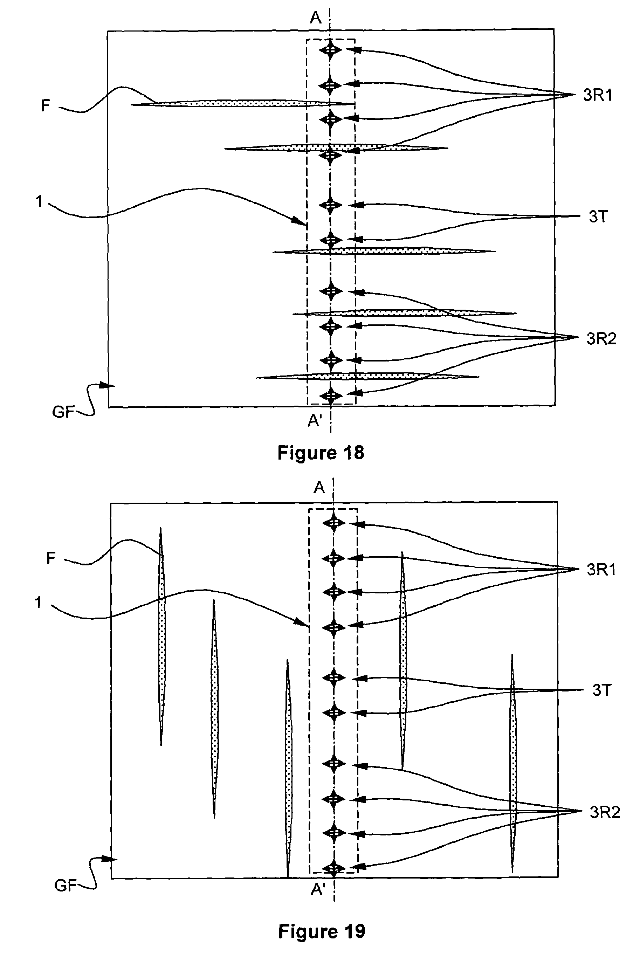

FIGS. 18-20 schematically illustrate a formation comprising fractures. The fractures may be natural fractures due to the geological formation stress or fractures induced by the drilling operation. The fractures may be filled with the fluid mixture from the borehole (generally conductive because enriched in water) or with hydrocarbon fluid mixture (generally resistive). Assuming that the electromagnetic properties of the fluid mixture invading the geological formation are known, it is possible to identify the fractures orientations within the formation.

FIG. 18 schematically illustrates a formation comprising horizontal fractures that are perpendicular to the pad-measurement axis AA'. In this situation, a resistive, fluid filled fracture will create an important signal according to the broadside mode and a substantially zero signal according to the endfire mode.

FIG. 19 schematically illustrates a formation comprising vertical fractures that are parallel to the pad-measurement axis AA'. In this situation, a resistive, fluid filled fracture will create a substantially zero signal according to the broadside mode and an important signal according to the endfire mode.

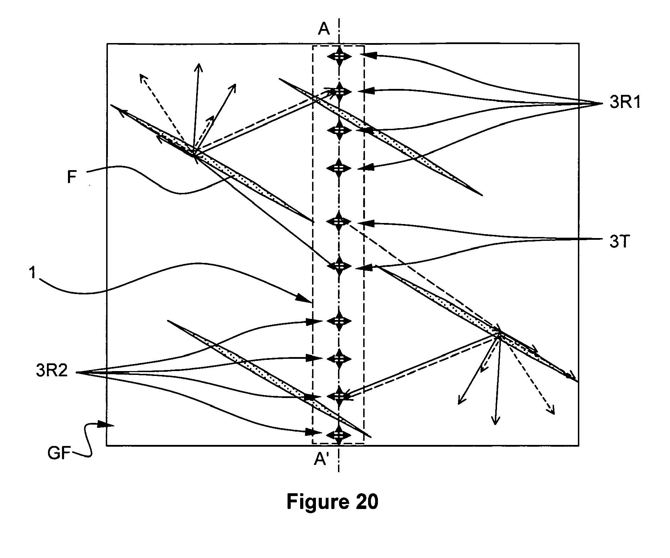

FIG. 20 schematically illustrates a formation comprising dipping fractures that are tilted by an angle of around 30° against the pad-measurement axis AA'. In this situation, a resistive fluid filled fracture will create a signal being a combination of the broadside mode and the endfire mode.

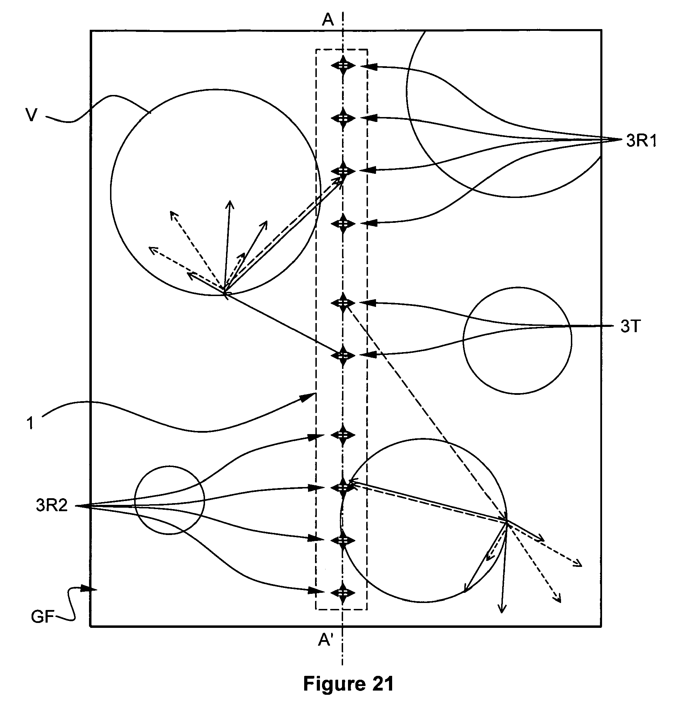

FIG. 21 schematically illustrates a formation comprising randomly sized and distributed vugs. It has been observed a typical measurement response of the cross-polarization signals to vugs on log data from field tests. From these observations, the cross-polarization measurements provide a localized, non-zero signal in the presence of vugs. These measurements may be used to quantitatively characterize the vugs and/or their statistical size and/or spatial distribution.

## FINAL REMARKS

A particular application of the invention relating to a wireline tool has been described. However, it is apparent for a person skilled in the art that the invention is also applicable to a logging-while-drilling tool. A typical logging-while-drilling tool is incorporated into a bottom-hole assembly attached to the end of a drill string with a drill bit attached at the extreme end thereof. Measurements can be made either when the drill string is stationary or rotating. In the latter case an additional measurement is made to allow the measurements to be related to the rotational position of the drill string in the borehole. This is preferably done by making simultaneous measurements of the direction of the earth's magnetic field with a compass, which can be related to a reference measurement made when the drill string is stationary. It will also be apparent for a person skilled in the art that the invention is applicable to onshore and offshore hydrocarbon well location.

It is apparent that the term "pad" used hereinbefore generically indicates a contacting element with the surface of the borehole wall. The particular contacting element shown in the Figures for maintaining the antennas in engagement with the borehole wall is illustrative and it will be apparent for a person skilled in the art that other suitable contacting element may be implemented, for example a sonde with a backup arm. The same remark is also applicable to the particular probe deploying system shown on the Figures.

Finally, it is also apparent for a person skilled in the art that application of the invention to the oilfield industry is not limited as the invention can also be used in others types of geological surveys.

The drawings and their description illustrate rather than limit the invention. Any reference sign in a claim should not be construed as limiting the claim. The word "comprising" does not exclude the presence of other elements than those listed in a claim. The word "a" or "an" preceding an element does not exclude the presence of a plurality of such element.

### Claims

1. An antenna (3) of an electromagnetic probe used in investigation of geological formations (GF) surrounding a borehole (WBH) comprising a conductive base (31) and a first antenna element (32), the conductive base (31) comprising an opened non-resonant cavity (33), the first antenna element (32) being embedded in the cavity (33) and going right trough the cavity,
   wherein the first antenna element (32) is comprised of a center-split half-coaxial wire so as to define a symmetrized antenna radiation pattern.

2. An antenna of an electromagnetic probe according to claim 1,
   wherein the first antenna element (32) comprises a connection wire coupled to a dipole wire (35), the connection wire passing through the conductive base (31) and being insulated relatively to the conductive base (31), and
   wherein the dipole wire (35) extends through the cavity from a first cavity wall (33A) to a second cavity wall (33B), the dipole wire (35) being shorted to the second cavity wall (33B), the dipole wire (35) having a first portion (35A) of a first diameter and a second portion (35B) of a second diameter superior to the first diameter, an outer cylindrical conductor (36) shorted to the first cavity wall (33A) shielding the wire substantially around the first portion (35A), the outer cylindrical conductor (36) having a diameter substantially equal to the second diameter, a gap (37) separating the outer cylindrical conductor (36) from the second portion (35B), the gap (37) being positioned at substantially half of a length of the dipole wire (35).

3. An antenna of an electromagnetic probe according to claim 1 or 2, wherein the antenna comprises a first antenna element (32) and a second antenna element (42), the second antenna element (42) having a structure identical to the first antenna element (32), and wherein the second antenna element (42) is positioned into the cavity (33) and according to a direction defined by the dipole wire (35) of the second antenna element (42) substantially orthogonal to a first antenna element (32) dipole wire (35) defined direction.

4. An antenna of an electromagnetic probe according to any one of the claims 1 to 3, wherein the cavity (33) has a parallelepipedic or a cylindrical shape.

5. An antenna of an electromagnetic probe according to any one of the claims 1 to 4, wherein the cavity (33) is filled with a dielectric material.

6. An antenna of an electromagnetic probe according to any one of the claims 1 to 4, wherein the cavity (33) is filled with a shaped core (45) made of a magnetically permeable material.

7. An antenna of an electromagnetic probe according to any one of the claims 1 to 6, wherein the cavity (33) is closed by a cover made of a protective material.

8. An antenna module comprising an antenna of an electromagnetic probe according to any one of the claims 1 to 7, wherein the conductive base (31) further comprises a printed circuit board (44) coupled to the antenna by means of the connection wire, the printed circuit board (44) comprising an impedance-matching network and being located at a distance inferior to a size of the cavity (33) from the dipole wire (35).

9. An electromagnetic logging apparatus used in investigation of geological formations (GF) surrounding a borehole (WBH), comprising:

   - a logging tool (TL) moveable through the borehole,
   - an electromagnetic probe (1) comprising a pad (2) mounted on the logging tool (TL), adapted for engagement with the borehole wall (WBW) by a wall-engaging face of the pad,
   - at least one antenna (3B, 3C, 3T) mounted in the wall-engaging face and used as a transmitting antenna,
   - a plurality of spaced antennas (3A, 3D, 3R1, 3R2) mounted in the wall-engaging face and used as receiving antennas positioned in spaced relation to the transmitting antenna (3B, 3C, 3T),
   - a transmitter module (4T) adapted for energizing the transmitting antenna to transmit electromagnetic energy into the formations at a determined frequency, and
   - a receiver module (4R) adapted for receiving and processing an output signal at each of the receiving antennas representative of electromagnetic energy received from the formations,

   wherein at least one of the receiving antennas (3A, 3D, 3R1, 3R2) is an antenna according to any one of the claims 1 to 7.

10. A cross-polarization measurement method, wherein the method comprises the steps of:

   - running a logging tool through a borehole and engaging a pad with a borehole wall,
   - radiating electromagnetic signals into a formation surrounding the borehole by means of at least one transmitting antenna according to claim 3 and mounted in the wall-engaging face of the pad, the formation comprising a plurality of geological feature, the electromagnetic signals being radiated in two orthogonal polarizations with a high degree of mutual signal rejection, one polarization being parallel to an axis of the pad, the other being orthogonal to said axis,
   - performing a plurality of cross-polarization measurements by means of at least one receiving antenna according to claim 3, the cross-polarization measurements consisting in measuring magnetic moments according to two orthogonal polarization directions and generating a broadside signal corresponding to a horizontal magnetic moment excitation and an endfire signal corresponding to a vertical magnetic moment excitation, and
   - deducing the plurality of geological feature surrounding the borehole based on the broadside and endfire signals.

**11.** A cross-polarization measurement method according to claim 10, wherein the method further comprises the steps of:

- combining the cross-polarization measurements so as to form a cross-polarization signal, and
- deducing the plurality of geological feature surrounding the borehole based on the cross-polarization signal.

**12.** A cross-polarization measurement method according to claim 10, wherein the geological feature is a laminate (L), a fracture (F), a bed boundary (BB) or a vug (V).

**13.** A cross-polarization measurement method according to claim 10, wherein a non-zero broadside signal and a substantially zero endfire signal correspond to a heterogeneous formation comprising horizontal fractures (F) filled with a resistive fluid.

**14.** A cross-polarization measurement method according to claim 10, wherein a non-zero endfire signal and a substantially zero broadside signal correspond to a heterogeneous formation comprising vertical fractures (F) filled with a resistive fluid.

**15.** A cross-polarization measurement method according to claim 11, wherein a cross-polarization signal substantially equal to zero corresponds to a homogeneous, isotropic formation comprising horizontal laminates (L) or horizontal bed boundaries (BB).

**16.** A cross-polarization measurement method according to claim 11, wherein a cross-polarization signal proportional to a product $\sin\theta \times \cos\theta$ to a lowest order corresponds to a heterogeneous formation comprising laminates (L), fractures (F) or bed boundaries (BB) tilted against the polarization directions by an angle $\theta$.

**17.** A cross-polarization measurement method according to claim 11, wherein a localized, non-zero cross-polarization signal corresponds to a heterogeneous formation comprising randomly sized and distributed vugs (V).

**FIG. 1**

**FIG. 2**

**FIG. 3 - PRIOR ART**

a

142

133

132

z

y

**FIG. 4 - PRIOR ART**

132

J

a

y

**FIG. 5 - PRIOR ART**

z

y

**FIG. 6 - PRIOR ART**

132

z

y

**FIG. 7 - PRIOR ART**

132

**Figure 8**

**Figure 9**

**Figure 10**

**Figure 11**

**Figure 12**

**Figure 13**

A

1

L

3R1

3T

3R2

GF

A'

**Figure 14**

A

3R1

1

3T

L

3R2

GF

A'

**Figure 15**

**Figure 16**

**Figure 17**

Figure 18

Figure 19

**Figure 20**

**Figure 21**

**Figure 22**

**Figure 23**

**Figure 24**

**European Patent Office**

## EUROPEAN SEARCH REPORT

Application Number

EP 06 29 1460

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 704 581 A (CLARK BRIAN [US]) 3 November 1987 (1987-11-03) * column 3, line 3 - line 55 * * column 7, line 32 - line 37 * * column 7, line 68 - column 8, line 2; figure 4 * | 1,8-10 | INV. G01V3/30 |
| D,A | US 3 944 910 A (RAU RAMA N) 16 March 1976 (1976-03-16) * claim 1 * | 1,8-10 | |
| A | US 5 406 206 A (SAFINYA KAMBIZ A [US] ET AL) 11 April 1995 (1995-04-11) * abstract; figures 3,7a,7f * | 1,8-10 | |
| A | US 2006/145700 A1 (TABANOU JACQUES R [US] ET AL) 6 July 2006 (2006-07-06) * claim 1 * | 1,8-10 | |
| | | | TECHNICAL FIELDS SEARCHED (IPC) G01V |

The present search report has been drawn up for all claims

| Place of search | Date of completion of the search | Examiner |
|---|---|---|
| The Hague | 4 September 2007 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 1 901 094 A1

**ANNEX TO THE EUROPEAN SEARCH REPORT
ON EUROPEAN PATENT APPLICATION NO.**

EP 06 29 1460

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2007

| Patent document cited in search report | | Publication date | Patent family member(s) | | Publication date |
|---|---|---|---|---|---|
| US 4704581 | A | 03-11-1987 | NONE | | |
| US 3944910 | A | 16-03-1976 | CA | 1037118 A1 | 22-08-1978 |
| | | | IT | 1022074 B | 20-03-1978 |
| | | | TR | 18604 A | 13-05-1977 |
| US 5406206 | A | 11-04-1995 | NONE | | |
| US 2006145700 | A1 | 06-07-2006 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3849721 A
- US 3944910 A
- US 5434507 A
- US 5345179 A
- EP 1693685 A